# EUROPEAN PATENT SPECIFICATION

(11) **EP 4 625 220 B1**
(45) Date of publication and mention of the grant of the patent: **28.01.2026**
(21) Application number: 25165852.2
(22) Date of filing: 25.03.2025
(51) Int. Cl.: G06F 21/46, G06F 21/57, G06F 21/62

(54) **METHOD AND SYSTEM FOR DETECTING PASSPHRASES IN PLAIN TEXT**
VERFAHREN UND SYSTEM ZUR ERKENNUNG VON PASSPHRASEN IN KLARTEXT
PROCÉDÉ ET SYSTÈME DE DÉTECTION DE PHRASE DE PASSE DANS UN TEXTE EN CLAIR

(30) Priority: 28.03.2024 IN 202421025661
(43) Date of publication of application: 01.10.2025
(73) Proprietor: Tata Consultancy Services Limited, Maharashtra (IN)
(72) Inventor: MALAVIYA, Shubham Mukeshbhai, 411057 Pune, Maharashtra (IN); SHUKLA, Manish, 411057 Pune, Maharashtra (IN); LODHA, Sachin, 411057 Pune, Maharashtra (IN)
(74) Representative: Goddar, Heinz J.

(56) References cited:
- US-A1- 2020 065 476
- US-A1- 2021 350 001
- US-A1- 2021 397 697
- US-B1- 11 853 453

## Description

### CROSS-REFERENCE TO RELATED APPLICATIONS AND PRIORITY

The present application claims priority to Indian application no. 202421025661, filed on March 28, 2024

### TECHNICAL FIELD

The disclosure herein generally relates to text processing, and, more particularly, to a method and a system for detecting passphrases in plain text.

### BACKGROUND

In today's digital era, passwords play a crucial role as they are being used as a fundamental authentication mechanism for numerous services provided by a multitude of service providers. The service providers generally ask users to create strong and complex passwords for security purposes. However, the users often face the challenge of remembering unique passwords for each service they use.

To overcome this issue, the service providers are now encouraging users to use passphrases instead of passwords. A passphrase is a combination of letters, words, numbers, and symbols. The passphrase is designed to strike a balance between memorability and security.

But as the individuals frequently engage with services offered by multiple vendors, the challenge of remembering multiple passwords/passphrases still exists. So, in an attempt to address this memorization burden, the users commonly resort to storing their passwords or passphrases in plaintext. However, leaving these sensitive credentials unprotected poses a significant risk. In the event of a security breach, where an attacker gains access to plaintext passwords/passphrases, the potential consequences extend beyond financial losses. Hence, it becomes imperative to identify and secure passwords or passphrases stored in the plaintext by implementing appropriate security measures.

Currently, various approaches are available for detecting passwords in plaintext. However, methodologies devised for password detection are not directly applicable to passphrase detection due to the distinct nature of passphrases, as it involves the use of multiple words, symbols, numbers, and special characters. Document (US 2021/350001) provides a technological solution for mitigating a cybersecurity risk on a computer that potentially includes a plaintext password. The solution includes searching a computer resource on the computer, analyzing any text, detecting a string of characters in the text that potentially includes a plaintext password, determining a confidence score for the string of characters indicating a likelihood the string of characters includes the plaintext password, and effectuating a remediation action based on the confidence score, wherein the remediation action includes encrypting the string of characters when the confidence score is equal to or greater than a first certainty level (Abstract). Document (US 2020/065476) discloses that cleartext passwords represent a security risk. An unencrypted password can be exploited to gain access to a system and/or perform unauthorized functions. This disclosure describes how to detect cleartext passwords in a generalized manner using predictive text classifiers (e.g. Word2Vec). Using a corpus of text, an artificial intelligence model can be built by training a predictive text classifier to identify password anomalies (e.g., areas of text that occur with low statistical probability). Source program code, configuration files, log files, and other types of text can be automatically scanned for cleartext passwords without having to rely on password lists or other limited and/or labor intensive mechanisms, thus improving system security and reducing the chances of data exfiltration and unauthorized actions (Abstract). Document (US11853453) disclose a processor may receive clear text data. The processor may represent at least a portion of the clear text data as at least one array encoding a description of at least one feature of the clear text data. The processor may process the at least one array using a clustering algorithm to determine whether the at least one array is grouped with a benign cluster or a sensitive cluster of a model. In response to determining that the at least one array is grouped with the sensitive cluster, the processor may generate an alert indicating that the clear text data includes sensitive information (Abstract).

### SUMMARY

Embodiments of the present disclosure present technological improvements as solutions to one or more of the above-mentioned technical problems recognized by the inventors in conventional systems. For example, in one aspect, there is provided a method for detecting passphrases in plain text is as disclosed in claim 1.

In another aspect, there is provided a system for detecting passphrases in plain text is as disclosed in claim 7.

In yet another aspect, there are provided one or more non-transitory machine-readable information storage mediums comprising one or more instructions which when executed by one or more hardware processors perform passphrase detection in plain text is as disclosed in claim 13.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an example representation of an environment, related to at least some example embodiments of the present disclosure.
FIG. 2 illustrates an exemplary block diagram of a system for detecting passphrases in plain text, in accordance with an embodiment of the present disclosure.
FIG. 3 illustrates a schematic block diagram representation of a processors associated with the system of FIG. 2 for detecting passphrases in the plain text, in accordance with an embodiment of the present disclosure.
FIG. 4 illustrates a schematic block diagram representation of a passphrase detection module associated with the system of FIG. 2 and FIG. 1 for generating the set of context from text present in each potential file, in accordance with an embodiment of the present disclosure.
FIG. 5 illustrates an exemplary flow diagram of a method for detecting passphrases in plain text, in accordance with an embodiment of the present disclosure.
FIG. 6 illustrates a schematic representation of a pre-trained machine learning based model, in accordance with an embodiment of the present disclosure.
FIG. 7 illustrates a schematic representation showing creation of a constituency tree database, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Passwords have become ubiquitous in the digital age, as they serve as a fundamental method for secure access to various online platforms, devices, and services. Whether we are logging into email account, accessing social media profiles, or conducting online banking transactions, passwords play a crucial role in verifying our identity.

If the attackers are successful in acquiring user credentials/valid passwords, they might get access to secure systems and may often escalate their access privileges to an administrator or superuser level. With the widespread use of numerous services from various providers, individuals, both for personal use and within the organizations, face the challenge of creating and remembering distinct passwords for each service. Consequently, users and employees often resort to storing their credentials in plaintext on their respective systems. Over time, these stored credentials may be forgotten without any appropriate care. Any compromise of such information can result in significant financial and reputational losses for individuals or organizations. Therefore, the critical task of detecting plaintext-stored credentials becomes imperative.

Further, as per the National Institute of Standards and Technologies (NIST) guidelines, the users are recommended to have a password of a minimum length of 8 characters, incorporating at least one uppercase letter, lowercase letter, numeric digit, and special character. However, with the increasing number of services utilized by individuals today, remembering complex passwords for each service/platform that they use can be daunting. Despite their complexity, traditional passwords remain susceptible to dictionary attacks. So, after recognizing these vulnerabilities, the NIST guidelines from 2017 advocate the use of passphrases as an alternative. The passphrases consist of longer sequences of words or a combination of words and characters, aiming to provide a more secure yet memorable form of authentication. They generally offer advantage of ease of remembering, better alignment with human cognition, higher entropy, improved adaptability to password policies without compromising usability and the like.

However, despite the many advantages, the passphrases present challenges when it comes to detecting them in plaintext. Detecting a passphrase becomes notably complex when it includes whitespace (" ") characters.

For instance, discerning the passphrase 'ants are awesome!' proves more intricate than 'ants$are$awesome!'. The latter passphrase can be treated as a single word by existing password detection methods, and based on the entropy of a word, the existing password detection methods can identify it as a password or passphrase. However, the former passphrase i.e., 'ants are awesome' comprises multiple words separated by whitespace, making it impossible to treat the entire passphrase as a single word. The existing password detection methods fail to detect passphrases in such cases.

The passphrases can consist of varying word counts and may closely resemble normal English words, which makes it nearly impossible to devise a generic strategy that is capable of identifying sets of words as part of a single passphrase. Further, detection of such passphrases without any additional context can result in an alarmingly high number of false positives.

Additionally, as the passphrases are designed for easy memorization, they often contain words from daily activities i.e., widely used and familiar terms, and personal information. These words, in isolation, are not inherently linked to the sensitive information. However, in a certain context, they may carry sensitive information.

So, techniques that can efficiently detect passphrases with different variations including passphrases containing whitespace in plain text is still to be explored.

Embodiments of the present disclosure overcome the above-mentioned disadvantages by providing a method and a system for detecting passphrases in plain text. The system of the present disclosure first receives a plurality of files that are present in a user device. Then, the system filters the plurality of files based on a set of file attributes to obtain a set of potential files. Thereafter, the sensitivity analysis of each potential file is performed based on one or more sensitivity indicators to obtain a sensitivity score for each potential file. Further, the system generates a set of context from text present in each potential file using a constituency tree based technique. Finally, the system utilizes the generated set of context along with the sensitivity score of each potential file to identify a set of potential passphrases present in the text using a pre-trained machine learning based language model.

In the present disclosure, the system and the method uses the constituency tree based technique in which linguistic features, such as Part-of-speech (POS) tags and constituency tree are used for extracting potential passphrases and for building relevant context surrounding the potential passphrases from the plaintext, thereby ensuring accurate identification of passphrases containing whitespace characters. The system and the method first performs filtering based on certain file attributes to eliminate irrelevant files, thereby ensuring reduced computational overhead while ensuring a usable system Further, the system uses the passphrase patterns database in which the unique POS patterns are categorized into a plurality of categories. The categorization of the unique POS patterns reduces the time-consumed for performing the passphrase detection and also ensures efficient searching of relevant text in a file.

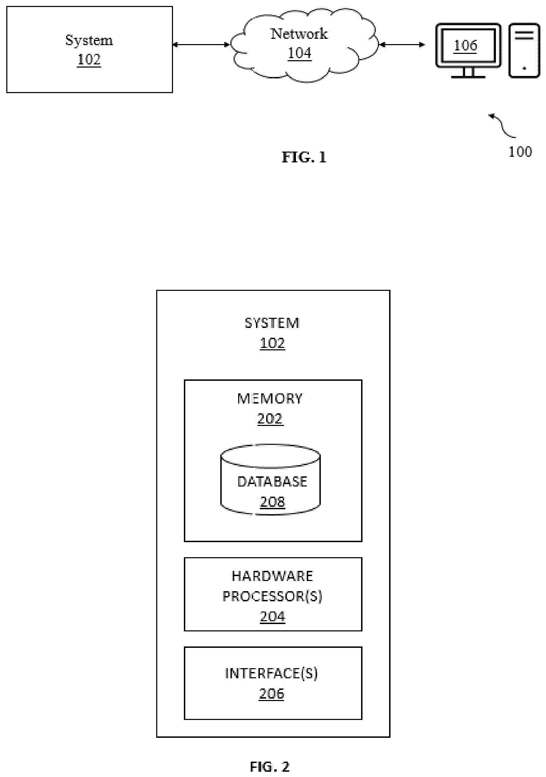

Referring now to the drawings, and more particularly to FIGS. 1 through 7, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, performing sensitivity analysis, generating a set of context, identifying a set of potential passphrases, etc. The environment 100 generally includes a system 102, an electronic device 106 (hereinafter also referred as a user device 106), each coupled to, and in communication with (and/or with access to) a network 104. It should be noted that one user device is shown for the sake of explanation; there can be more number of user devices.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The user device 106 is associated with a user (e.g., a general computer user/an employee in a government or private organization) who prefers to store passwords/passphrases in a text file for memorization purposes. Examples of the user device 106 include, but are not limited to, a personal computer (PC), a mobile phone, a tablet device, a Personal Digital Assistant (PDA), a server, a voice activated assistant, a smartphone, and a laptop.

The system 102 includes one or more hardware processors and a memory. The system 102 is first configured to receive a plurality of files via the network 104 from the user device 106. The system 102 then filters the plurality of files based on a set of file attributes to obtain a set of potential files. Thereafter, the system 102 performs a sensitivity analysis of each potential file of the set of potential files based on one or more sensitivity indicators using a neural network based model. The neural network based model assigns a sensitivity score to each potential file based on the sensitivity analysis of a respective potential file.

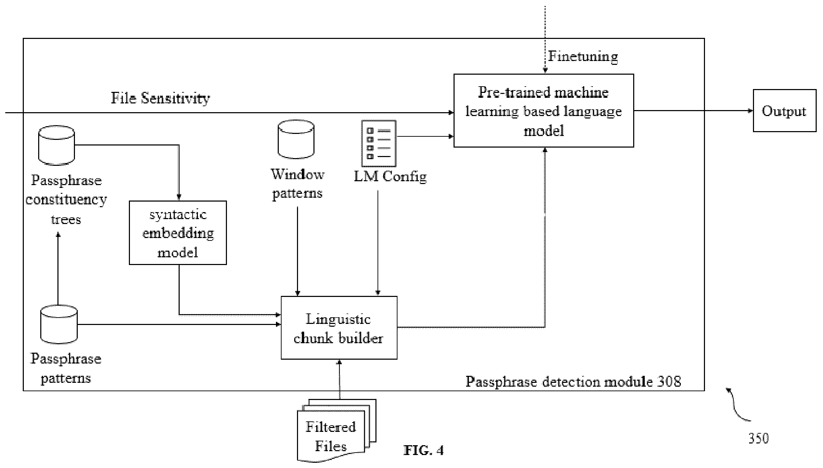

Further, the system 102 generates a set of context from text present in each potential file of the set of potential files using a constituency tree based technique, **In** an embodiment, the system 102 may use contextual entropy based technique for generating the set of context. **In** another embodiment, the system 102 may use a perplexity based technique for generating the set of context. **In** yet another embodiment, the system 102 may use a chunk summary based technique for generating the set of context. The constituency tree based technique, the contextual entropy based technique, the perplexity based technique and the chunk summary based technique are explained in detail with reference to FIG. 4.

Once the set of context and the sensitivity score of each potential file are available, the system 102 identifies a set of potential passphrases present in the text using a pre-trained machine learning based language model based on the set of context and the assigned sensitivity score of each potential file.

The process of detecting passphrases in plain text is explained in detail with reference to FIG. 4.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

FIG. 2 illustrates an exemplary block diagram of the system 102 for detecting passphrases in plain text, in accordance with an embodiment of the present disclosure. In some embodiments, the system 102 is embodied as a cloud-based and/or SaaS-based (software as a service) architecture. In some embodiments, the system 102 may be implemented in a server system. In some embodiments, the system 102 may be implemented in a variety of computing systems, such as laptop computers, notebooks, hand-held devices, workstations, mainframe computers, and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 208 can be stored in the memory 202, wherein the database 208 may comprise, but are not limited to, a set of file attributes, the constituency tree based technique, an authentication mechanism, the pre-trained machine learning based language model, a syntactic embedding model, a sliding window technique, a passphrase pattern database, a passphrase constituency tree database, a predefined similarity score threshold, a user feedback store, one or more processes and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

It is noted that the system 102 as illustrated and hereinafter described is merely illustrative of an apparatus that could benefit from embodiments of the present disclosure and, therefore, should not be taken to limit the scope of the present disclosure. It is noted that the system 102 may include fewer or more components than those depicted in FIG. 2.

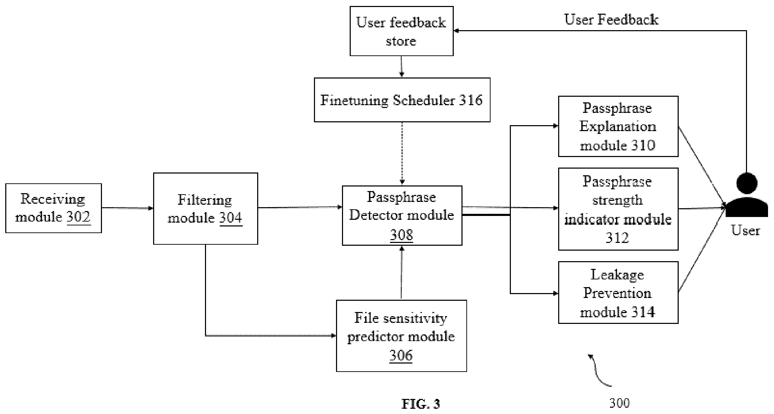

FIG. 3, with reference to FIGS. 1 and 2, illustrates a schematic block diagram representation 300 of the processors 204 associated with the system 102 of FIG. 2 for detecting passphrases in the plain text, in accordance with an embodiment of the present disclosure.

In one embodiment, the one or more processors 204 includes a receiving module 302, a filtering module 304, a file sensitivity predictor module 306, a passphrase detector module 308, a passphrase explanation module 310, a passphrase strength indicator module 312, a leakage prevention module 314, and a fine-tuning scheduler 316.

The receiving module 302 includes suitable logic and/or interfaces for receiving a plurality of files that are present in a user device, such as the user device 106 associated with a user.

The filtering module 304 is in communication with the receiving module 302. The filtering module 304 includes suitable logic and/or interfaces for receiving the plurality of files received by the receiving module 302. **In** an embodiment, the filtering module 304 is configured to filter the plurality of files based on a set of file attributes to obtain a set of potential files. **In** at least one example embodiment, the set of file attributes refer to attributes that may help in filtering non-essential files among the plurality of files. For instance, certain files of the plurality of files are seldom accessed by users, such as system registry files, virtual memory files (Pagefile.sys), and hibernation files (Hiberfil.sys) in Windows operating systems. Similarly, in Linux and macOS, files like system-wide configuration files, system binaries and admin commands, and system and application logs are typically untouched by users. So, chances of user storing password in system files are negligible. Hence, the system files can be ignored. Further, passwords or passphrases are generally not stored in files exceeding a few kilobytes or megabytes in size. So, the size of the file also can be a file attribute in determining potential files where passphrases can be stored. Similarly, there are many other file attributes that are utilized by the filtering module 304 to obtain the set of potential files.

The filtering of the unnecessary files from the passphrase detection analysis significantly reduces computational overhead of the system 102 while ensuring a usable system.

The file sensitivity predictor module 306 is in communication with the filtering module 304. The file sensitivity predictor module 306 is configured to perform a sensitivity analysis of each potential file of the set of potential files based on one or more sensitivity indicators. **In** an embodiment, the one or more sensitivity indicators are external attributes or context, that offer additional insights into a file, such as file location and access patterns. **In** particular, the external attributes or context aides user and the operating system in comprehending its purpose, usage, or significance. For instance, the directory or folder where a file resides is part of its external context, providing insights on the file's organizational structure, purpose, or relationships with other files. **In** at least one example embodiment, the file sensitivity predictor module 306 uses trained deep learning models or machine learning models or language models to recognize locations in the file system that might contain sensitive information. Examples of the model include, but are not limited to, Neural networks, Deep neural networks (DNNs), Convolutional neural networks (CNNs), Recurrent neural networks (RNNs), Long Short-Term Memory (LSTM) Networks, Transformers and its derivative architectures, and Generative Adversarial Networks (GANs).

The file sensitivity predictor module 306 also assigns a sensitivity score to each potential file based on the sensitivity analysis of a respective potential file.

The passphrase detector module 308 is in communication with the file sensitivity predictor module 306. The passphrase detector module 308 is configured to detects singular as well as multiple occurrences of passphrases present within the set of potential files based on the file content and the sensitivity scores provided by the file sensitivity predictor module 306 using a pre-trained machine learning based language model. The passphrase detector module 308 is explained in detail with reference to FIG. 4.

The passphrase explanation module 310 is in communication with the passphrase detector module 308. The passphrase explanation module 310 is configured to recognize all potential passphrases present in each potential file. The passphrase explanation module 310 is also configured to provide explanation on why a particular string or phrase is identified as a passphrase. In one embodiment, the explanation provide by the passphrase explanation module 310 enhance the intuitiveness of the system 102 as it enables the user to analyze the behavior of the machine learning based language model and provide feedback in case of any unexpected outcomes.

The passphrase strength indicator module 312 is in communication with the passphrase detector module 308. The passphrase strength indicator module 312 is configured to evaluate strength of each potential passphrase based on various criterias, such as length, complexity, and uniqueness. The passphrase strength indicator module 312 is also configured to provide feedback to the user about the strength of the potential passphrase in the form of a visual indicator/message.

In an embodiment, the passphrase strength indicator module 312 may use a color coding scheme (e.g., red for weak, yellow for medium, green for strong) to convey the strength of the detected passphrase to the user. In another embodiment, the passphrase strength indicator module 312 may use a textual feedback (e.g., "weak," "medium," "strong") to convey the strength of the detected passphrase to the user. The color coding scheme/ textual feedback may help the user in understanding the requirements for creating a secure passphrase.

The leakage prevention module 312 is in communication with the passphrase detector module 308. The leakage prevention module 312 is configured to mask the potential passphrases present in the text of each potential file to reduce the risk of unauthorized access in the event of a security breach. In an embodiment, the leakage prevention module 312 ensures the detected passphrases are obscured and are visible only upon the provision of appropriate credentials. In particular, the passphrases that are vital for accessing various services, are protected from unauthorized access by masking each potential passphrase present in the text of each potential file. The leakage prevention module 312 ensures that the set of potential passphrases are displayed only upon determining that the user is the valid user, which further ensures that a balance is present between robust security measures and user-friendly sensitive file access.

The fine-tuning scheduler 316 is in communication with the passphrase detector module 308 and the user feedback store.

In an embodiment, the user feedback store serves as a centralized hub where valuable insights and comments from the users are systematically stored. The user feedback store is integrated with the finetuning scheduler 316 so that the finetuning scheduler 316 can refine and enhance the performance of the machine learning based language model through a continuous feedback loop. In particular, the user feedback store act as a reservoir for a diverse range of user inputs, such as comments, suggestions, and observations related to the behavior, accuracy, and overall user experience of the system 102. In at least one example embodiment, the user feedback store is also configured to categorize and analyze user feedback systematically using advanced analytics and natural language processing techniques which are then used by the system 102 for identifying patterns and recurring themes, and for extracting valuable insights from user-generated content stored in the user feedback store.

The fine-tuning scheduler 316 is configured to fine-tune the pre-trained machine learning based language model based on feedback and comments present in the user feedback store. The fine-tuning scheduler 316 follows an iterative process in which one or more parameters and one or more hyperparameters of the pre-trained machine learning based language model are updated in each iteration until the pre-trained machine learning based language model accurately identifies the set of potential passphrases present in the text of at least one potential file. The iterative process ensures a continuous improvement of the pre-trained machine learning based language model with the evolving needs and expectations of users.

FIG. 4, with reference to FIGS. 1-3, illustrates a schematic block diagram representation 350 of the passphrase detection module 308 associated with the system 102 of FIG. 2 and FIG. 1 for generating the set of context from the text present in each potential file, in accordance with an embodiment of the present disclosure.

In an embodiment, the passphrase detection module 308 uses the pre-trained machine learning based language model, language model configuration files (LM config), a syntactic embedding model, a linguistic chunk builder, the passphrase constituency tree database and the passphrase pattern database for generating the set of context from the text present in each potential file.

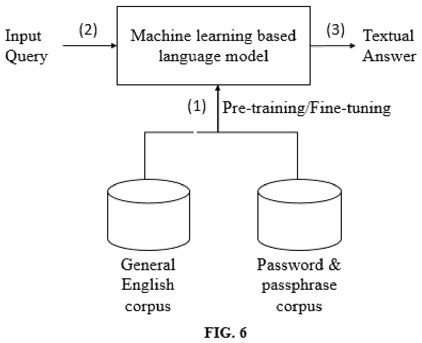

In an embodiment, the pre-trained machine learning based language model (shown with reference to FIG. 6) is trained to understand and generate human-like language. The machine learning based language model is trained on large datasets containing text from a diverse range of sources, such as books, articles, websites, passwords and passphrase corpus and other text corpora. Once the machine learning based language model is trained, the pre-trained machine learning based language model may generate human-like text by predicting the most likely sequence of words based on a provided context. In at least one example embodiment, the pre-trained language models, such as generative pre-trained transformer (GPT-3), Google Bard, large language model meta artificial intelligence (LLaMA), Anthropic Claude etc., that are pre-trained on massive dataset can be used by the passphrase detection module 308.

The pre-trained machine learning based language model is designed to predict probability of a sequence of words or characters given the context of the preceding words or characters. The machine learning based language model also learns the patterns, relationships, and structures present in the language in order to understand the context of the words in a sentence.

In at least one example embodiment, the system 102 captures the syntactic, semantic, and pragmatic aspects of language, which allows the pre-trained machine learning based language model to generate coherent and contextually relevant text.

In an embodiment, the language model configuration files encompasses a range of parameters and settings that defines the architecture, hyperparameters, and behavior of the pre-trained machine learning based language model. The language model configuration files may incorporate hyperparameters like learning rate, batch size, epochs, optimizer type, loss function, evaluation metrics, maximum sequence length, and other relevant parameters. It should be noted that the contents of the language model configuration file may differ based on the underlying architecture and the implementation framework.

In an embodiment, the linguistic chunk builder is configured to build linguistic chunks and to extract only the text that is relevant to user credentials. It should be noted that the chunk refers to a discrete and manageable portion or segment of the larger text that might be present in a potential file. The breaking down of a long text into smaller chunks may help the system 102 in various ways, such as ease of processing, efficient analysis, and improved performance of the system 102.

In at least one example embodiment, the linguistic chunk builder is configured to generate a set of context from the text present in each potential file of the set of potential files using a context generation technique among one or more context generation techniques that may be available to the system 102. Examples of the one or more context generation techniques include, but are not limited to, the constituency tree based technique, the contextual entropy based technique, the perplexity based technique and the chunk summary based technique.

In an embodiment, the linguistic chunk builder uses the constituency tree based technique for generating the set of context. In constituency tree based technique, the linguistic chunk builder requires a passphrase patterns database, a passphrase constituency tree database, a syntactic embedding model and the pre-trained machine learning based language model.

In one embodiment, the passphrase patterns database is created using passphrases that have been leaked in the public domain. Upon utilizing the passphrase patterns database, a plurality of distinctive patterns commonly used by users when creating passphrases can be identified. Each entry in the passphrase patterns database exclusively consists of strings representing passphrases. In particular, for creating the passphrase patterns database, a Part of Speech (POS) tag is assigned to each entry present in a passphrase dataset. Subsequently, the unique POS sequences present within the dataset are identified. For instance, an output for the POS of passphrase "sponge bob square pants" is <NN, FW, JJ, NNS>.

In the passphrase patterns database, the unique POS patterns are categorized into following groups: a) passphrase containing words + numbers + special characters, b) passphrase containing words + numbers, and c) passphrase containing words only. The categorization of the unique POS patterns may help in reducing the time-consumed for performing the passphrase detection.

In one embodiment, the passphrase constituency tree database is created to store context around possible passphrases that are present within a text. The constituency parse trees are leveraged to build the context of the passphrases.

In constituency parsing, generally sentences are analyzed by breaking down it into sub-phrases known as constituents. So, to construct the passphrase constituency tree database, examples from two distinct datasets are combined. A first dataset, denoted as A1, comprises the unique POS patterns identified during the creation of the passphrase patterns database. For the second dataset, A2, diverse patterns observed in how users store their credentials within plain text files are utilized. Examples of some diverse patterns include, but are not limited to, 1) username followed by a passphrase in the next line, 2) application name on the first line, followed by the username on the subsequent line, and the passphrase on the line following that, 3) username followed by the passphrase on a single line, and 4) email address followed by the passphrase on the subsequent line and the like.

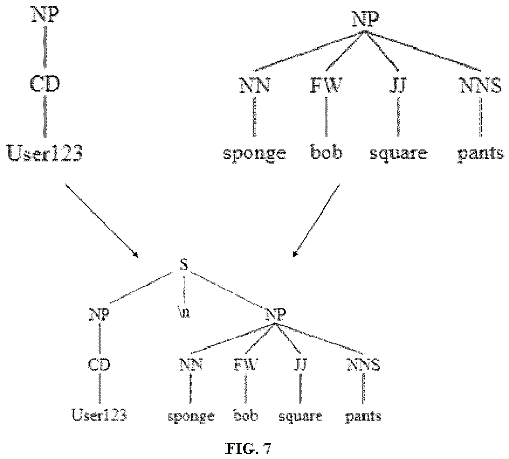

Thereafter, to construct constituency parse trees for passphrase structures, constituency trees are generated for the patterns identified in dataset A2. The patterns represent various ways that are used by the users to store credentials. Further, from the collection of patterns, the passphrases are excluded and are replaced with the constituency of passphrases obtained from the passphrase patterns database. As in the passphrase pattern database, the POS sequences are transformed into constituency trees by encapsulating sequences under a Noun Phrase (NP) parent node. Finally, a strategy that explores different combinations from the datasets A1 and A2 is employed to create a larger dataset. The large dataset then serves as the training data for a constituency tree based syntactic embedding model, which is subsequently utilized to contextualize potential passphrases within the text. A schematic representation showing creation of the constituency tree database is shown with reference to FIG. 7.

In an embodiment, in the constituency tree based technique, first the syntactic embedding model is trained using constituency parse trees extracted from the passphrase constituency tree database using a graph embedding algorithm. In an embodiment, without limiting the scope of the invention, the graph embedding algorithm used for training the syntactic embedding model is a Node2Vec algorithm. Then, a sliding window technique is applied on the text present in each potential file based on a pre-defined window size to obtain one or more type of content present in the text. In at least one example embodiment, the window size equal to the maximum number of characters allowed for passphrase according to NIST guidelines is selected. A plurality of text windows are created for the text present in each potential file based on the pre-defined window size, and the type of content present in each text window is obtained using the sliding window technique. In particular, within each text window, it is checked whether it consists solely of words, words and numbers, or words, numbers, and special characters.

Thereafter, a plurality of part-of-speech (POS) tags are assigned to window text present in each text window and the closest matches from the passphrase patterns database are identified. In one embodiment, the text window may contain text unrelated to passphrases, so in that cases, partial matching is performed with the passphrase patterns database. The identified matches are then stored in a phrase list.

Further, a context window is generated for each phrase in the phrase list. In an embodiment, the context window refers to potential window patterns that can exist in general. Example of the potential window patterns include, but are not limited to, a Username and a Password in same line, the Username and the Password in different line, and an application name, the Username and the Password in consecutive lines. So, each context window surrounding a potential window pattern *Lₖ* is examined and if the potential file contains a structure resembling any of the context window, the constituency tree for the matched context window is created. Finally, the embedding for the constituency trees are computed using the trained syntactic embedding model and the computed embedding are compared with the embedding of the constituency tree of *Lₖ* to obtain a similarity score. In an embodiment, without limiting the scope of the invention, the similarity score is computed using a cosine similarity technique. If the similarity score is found to be exceeding a predefined similarity score threshold τ, then the context window with the respective phrase is appended to the set of context.

Once the process is carried out for each phrase present in the phrase list, the set of context is forwarded to the machine learning based language model which then identifies the passphrases present in the extracted text.

An algorithm for constituency tree based technique is defined below:

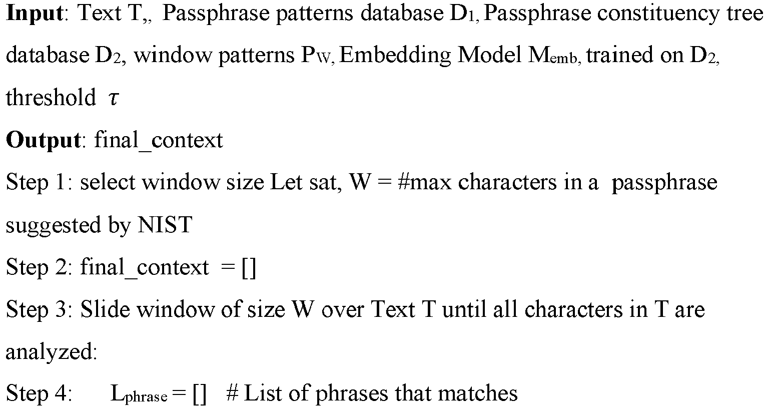

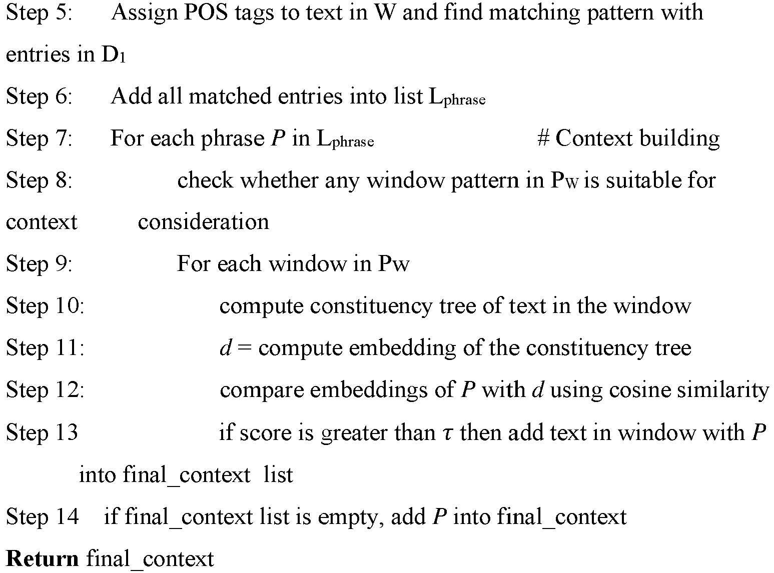

In another embodiment, the linguistic chunk builder uses the contextual entropy based technique for generating the set of context. In general, contextual entropy refers to an amount of uncertainty or randomness present in the context surrounding a particular word or a sequence of words in a text. Basically, the ccontextual entropy measures how predictable the surrounding words are provided the context. For instance, consider a sentence *"Alice loves to play piano and sing songs."* Now, if the focus is on the word "piano" and the context of the word "piano" is examined. The context here includes the words that appear nearby, which are "play", "and", and "sing." The contextual entropy of "piano" in this sentence may be relatively low because the surrounding words provide strong contextual clues about what type of activity Alice is doing. The word "play" suggests an activity involving instruments, and "sing" adds the musical context. Thus, given the context, it may be highly predictable that "piano" would appear in this sentence showing high semantic similarity. Now if a different sentence such as *"Correct horse battery staple"* is considered. Here, the context surrounding the word "battery" includes "Correct", "horse", and "staple". The words in this context are not related to battery in any sense. In fact, these words are completely random and there is no semantic relation between the words in the considered sentence. Hence, a low contextual entropy indicates that the surrounding words strongly predict the appearance of the word in question, while a high contextual entropy suggests that the context provides less predictive information about the word in question.

So, the correlation between two different concepts of entropy and the semantic similarity is used in the context of natural language processing and the contextual entropy based technique propose to use the sematic similarity to measure the contextual entropy.

In the contextual entropy based technique, first a sliding window technique is applied on the text present in each potential file based on the pre-defined window size. As a result, the plurality of text windows are created for the text present in each potential file based on the pre-defined window size. Then, the text present in each text window is tokenized into a set of words. Thereafter, for each word present in the text, a word embedding of the word is computed with word embeddings of the neighbouring words using a pre-trained embedding model. Further, a cosine similarity score is computed between the embedding of the word and the embedding of its neighbouring words. Furthermore, a minimum cosine similarity score is calculated, and the minimum cosine similarity score is appended to an entropy score list. Finally, an entropy score is calculated by aggregating the scores in the entropy score list and the calculated entropy score is then compared with a predefined entropy threshold. Upon determining that the entropy score is less than the predefined entropy threshold, the text is appended to the set of context.

An algorithm for the contextual entropy based technique is defined below:

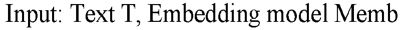

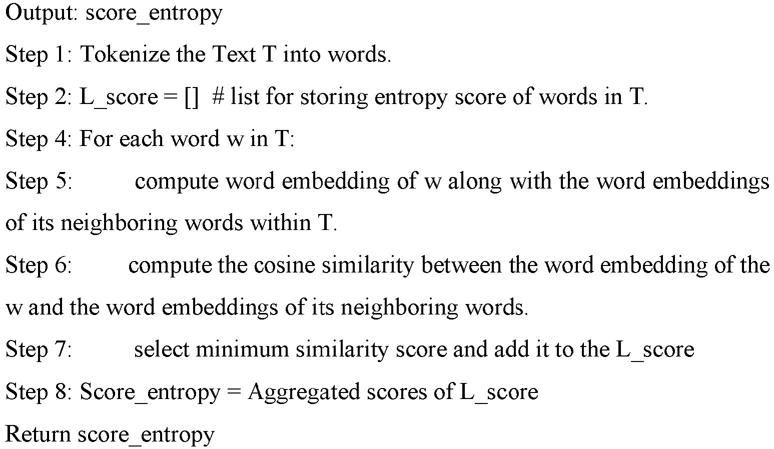

In yet another embodiment, the linguistic chunk builder uses the perplexity-based technique for generating the set of context. In general, the perplexity serves as a metric to assess language models. In particular, it provides a means to evaluate the quality of written language, sentences, or words. The perplexity quantifies the degree of uncertainty a machine learning model exhibits when assigning probabilities to a given text. A lower perplexity score indicates that the machine learning model is more confident in the input resembling text from the input data distribution.

In the perplexity-based technique, it is assumed that the machine learning based language model is trained on corpora of text that represent human language. The perplexity-based technique is similar to the contextual entropy-based method. Only difference is that instead of computing perplexity score for each word and its surrounding context in a text window, the machine learning based language model is utilized by the linguistic chunk builder to compute perplexity score of entire text in the window. And, if the perplexity score is found to be greater than a predefined perplexity threshold, then the text window is appended to the set of context.

In further yet another embodiment, the linguistic chunk builder uses the chunk summary based technique for generating the set of context. In chunk summary based technique, the linguistic chunk builder breaks the text present in each potential file into a set of chunks. It should be noted that a chunk size is decided based on a use case, a maximum input length of the machine learning based language model, and/or other model parameters of the machine learning based language model. Thereafter, the linguistic chunk builder summarizes the information present in each chunk and use it as a context for a next chunk. This process is iteratively performed until the end of text present in each potential file. In particular, the process is iteratively performed until all the chunks present in the potential file are analyzed. The analyzed information is then appended to the set of context. In another embodiment, the created set of chunks can be directly passed to machine learning based language model for passphrase detection.

Once the set of context from the text present in each potential file of the set of potential files is generated using any of the techniques mentioned above, the generated set of context is passed to the pre-trained machine learning based language model which uses the set of context and the assigned sensitivity score of each potential file to come up with the set of potential passphrases that might be present in the text.

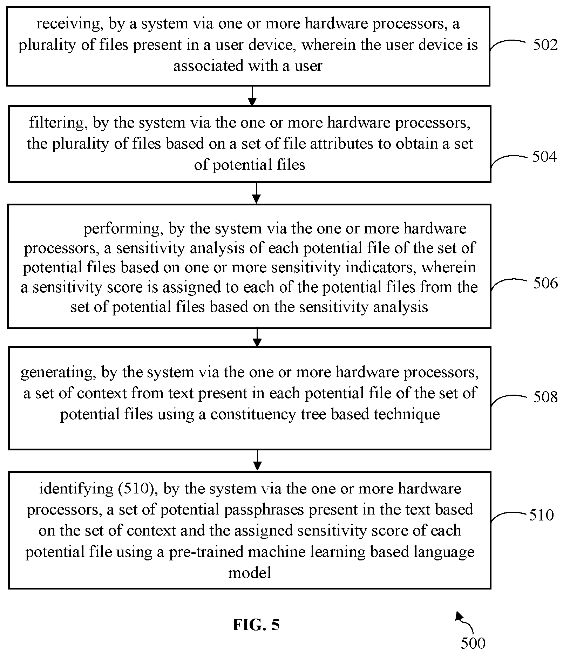

FIG. 5, with reference to FIGS. 1 - 4, illustrates an exemplary flow diagram of a method for detecting passphrases in plain text, in accordance with an example embodiment of the invention. The method 500 may use the system 102 of FIGS. 1 and 2 for execution. In an embodiment, the system 102 comprises one or more data storage devices or the memory 208 operatively coupled to the one or more hardware processors 206 and is configured to store instructions for execution of steps of the method 500 by the one or more hardware processors 206. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 502 of the present disclosure, the one or more hardware processors 206 of the system 102 receive a plurality of files present in a user device, such as the user device 106. The user device is associated with a user.

At step 504 of the present disclosure, the one or more hardware processors 206 of the system 102 filters the plurality of files based on a set of file attributes to obtain a set of potential files. In at least one example embodiment, the set of file attributes refer to file attributes that may help in filtering non-essential files among the plurality of files. For instance, certain files of the plurality of files are seldom accessed by users, such as system registry files, virtual memory files (Pagefile.sys), and hibernation files (Hiberfil.sys) in Windows operating systems. Similarly, in Linux and macOS, files like system-wide configuration files, system binaries and admin commands, and system and application logs are typically untouched by users. So, chances of user storing password in system files are negligible. So, the system 102 uses the set of file attributes to filter the non-essential files, such as system files among the plurality of files.

At step 506 of the present disclosure, the one or more hardware processors 206 of the system 102 perform a sensitivity analysis of each potential file of the set of potential files based on one or more sensitivity indicators. In an embodiment, the one or more sensitivity indicators are external attributes or context, that offer additional insights into a potential file, such as file location and access patterns. So, the hardware processors 206 assigns a sensitivity score to each of the potential files from the set of potential files based on the sensitivity analysis.

At step 508 of the present disclosure, the one or more hardware processors 206 of the system 102 generate a set of context from text present in each potential file of the set of potential files using a constituency tree based technique.

In constituency tree based technique, the one or more hardware processors 206 of the system 102 first trains a syntactic embedding model based on one or more constituency parse trees present in the passphrase constituency tree database using a graph embedding algorithm. Then, the one or more hardware processors 206 of the system 102 applies a sliding window technique on the text present in each potential file based on the pre-defined window size to obtain one or more type of content present in the text. In particular, the system 102 creates a plurality of text windows for the text present in each potential file based on the pre-defined window size. The type of content present in each text window is obtained using the sliding window technique.

Thereafter, the one or more hardware processors 206 of the system 102 assigns a part-of-speech (POS) tags to window text present in each text window. And the one or more matches present between the window text and one or more POS patterns present in the passphrase pattern database are identified based on the assigned POS tags. The identified one or more matches are then stored in a phrase list. In an embodiment, the phrase list may comprise one or more phrases.

Further, the one or more hardware processors 206 of the system 102 identify a context window for each phrase in the phrase list. Then, a constituency tree is created for at least one context window matching with a predefined set of context windows.

For each created constituency tree, the one or more hardware processors 206 of the system 102 compute an embedding for a respective constituency tree using the trained syntactic embedding model. The embedding of each constituency tree is then compared with an embedding of a phrase constituency tree created for each phrase in the phrase list. The one or more hardware processors 206 of the system 102 also provides a similarity score for each comparison.

Then, for each similarity score, the one or more hardware processors 206 of the system 102 determine whether the respective similarity score is greater than a predefined similarity score threshold.

Finally, for each phrase whose similarity score is found to be greater than the predefined similarity score threshold, the one or more hardware processors 206 of the system 102 append the respective phrase and the context window to the set of context.

At step 510 of the present disclosure, the one or more hardware processors 206 of the system 102 identify a set of potential passphrases present in the text based on the set of context and the assigned sensitivity score of each potential file using the pre-trained machine learning based language model.

In an embodiment, once the set of potential passphrases are identified, the one or more hardware processors 206 of the system 102 first determines whether the user is a valid user using an authentication mechanism. Upon determining that the user is the valid user, the one or more hardware processors 206 of the system 102 display the set of potential passphrases on the user device 106.

In case the user is determined to be an in-valid user, the one or more hardware processors 206 of the system 102 mask each potential passphrase present in the text of each potential file. And the masked potential passphrases are then displayed on the user device 106.

In an embodiment, the one or more hardware processors 206 of the system 102 also provides an explanation for each potential passphrase of the set of potential passphrases using the passphrase explanation module 310.

In an embodiment, the one or more hardware processors 206 of the system 102 also evaluates the strength of each potential passphrase of the set of potential passphrases based on a predefined set of criteria using the passphrase strength indicator module 312. The passphrase strength is then displayed on the user device 106 along with the respective potential passphrase.

In an embodiment, the one or more hardware processors 206 of the system 102 may receive at least one feedback and at least one comment on the one or more potential passphrases present in the set of potential passphrases. The at least one feedback and the at least one comment is then stored in the user feedback store.

In an embodiment, the one or more hardware processors 206 of the system 102 may fine-tune the pre-trained machine learning based language model based on the feedback and the comments present in the user feedback store using the fine-tuning scheduler 316. As explained earlier, the fine-tuning scheduler follows an iterative process in which one or more parameters and one or more hyperparameters of the pre-trained machine learning based language model are updated in each iteration until the pre-trained machine learning based language model accurately identifies the set of potential passphrases.

FIG. 7 illustrates a schematic representation showing creation of the constituency tree database, in accordance with an embodiment of the present disclosure.

As seen in FIG. 7, a distinct tree is generated for each of a username "user123" and a passphrase "sponge bob square pants" using currently available password detection tools. However, to establish context, a unified parse tree i.e. a constituency tree needs to be created for each pattern.

For this, the generated trees are merged with supplementary nodes that are contextually appropriate. For instance, in the above example, the username and passphrase are delimited by a newline character ("\n"). Consequently, the trees are merged accordingly, as seen in FIG. 7. It should be noted that this is just one example representation; depending on the context and pattern, many trees can be linked using various types of nodes and thus the constituency tree database will be created using the created constituency trees.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, the existing password detection methods fail to detect passphrases. So, to overcome the disadvantages, embodiments of the present disclosure provide a method and a system for detecting passphrases in plain text. More specifically, the system and the method uses the constituency tree based technique in which linguistic features, such as Part-of-speech (POS) tags and constituency tree are used for extracting potential passphrases and for building relevant context surrounding the potential passphrases from the plaintext, thereby ensuring accurate identification of passphrases containing whitespace characters. The system and the method first performs filtering based on certain file attributes to eliminate irrelevant files, thereby ensuring reduced computational overhead while ensuring a usable system Further, the system uses the passphrase patterns database in which the unique POS patterns are categorized into a plurality of categories. The categorization of the unique POS patterns reduces the time-consumed for performing the passphrase detection and also ensures efficient searching of relevant text in a file.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (500), comprising:
receiving (502), by a system via one or more hardware processors, a plurality of files present in a user device, wherein the user device is associated with a user;
filtering (504), by the system via the one or more hardware processors, the plurality of files based on a set of file attributes to obtain a set of potential files;
performing (506), by the system via the one or more hardware processors, a sensitivity analysis of each potential file of the set of potential files based on one or more sensitivity indicators, wherein a sensitivity score is assigned to each of the potential files from the set of potential files based on the sensitivity analysis; generating (508), by the system via the one or more hardware processors, a set of context from text present in each potential file of the set of potential files using a constituency tree based technique, wherein the constituency tree based technique comprises:
training, by the system via the one or more hardware processors, a syntactic embedding model based on one or more constituency parse trees present in a passphrase constituency tree database using a graph embedding algorithm;
applying, by the system via the one or more hardware processors, a sliding window technique on the text present in each potential file based on a pre-defined window size to obtain one or more types of content present in the text, wherein a plurality of text windows are created for the text present in each potential file based on the pre-defined window size, and wherein the type of content present in each text window is obtained using the sliding window technique;
assigning, by the system via the one or more hardware processors, a plurality of part-of-speech, POS, tags to a window text present in each text window;
identifying, by the system via the one or more hardware processors, one or more matches between the window text and one or more POS patterns present in a passphrase pattern database based on the plurality of assigned POS tags;
storing, by the system via the one or more hardware processors, the identified one or more matches in a phrase list, wherein the phrase list comprises one or more phrases;
identifying, by the system via the one or more hardware processors, a context window for each phrase in the phrase list;
creating, by the system via the one or more hardware processors, a constituency tree for at least one context window matching with a predefined set of context windows;
for each created constituency tree, computing, by the system via the one or more hardware processors, an embedding for an associated constituency tree using the trained syntactic embedding model;
comparing, by the system via the one or more hardware processors, the embedding of each constituency tree with an embedding of a phrase constituency tree created for each phrase in the phrase list, wherein a similarity score is obtained for each comparison;
for each similarity score, determining, by the system via the one or more hardware processors, whether the associated similarity score is greater than a predefined similarity score threshold; and
for each phrase whose similarity score is found to be greater than the predefined similarity score threshold, appending, by the system via the one or more hardware processors, the associated phrase and the context window to the set of context; and
identifying (510), by the system via the one or more hardware processors, a set of potential passphrases present in the text based on the set of context and the assigned sensitivity score of each potential file using a pre-trained machine learning based language model.

2. The processor implemented method (500) as claimed in claim 1, comprising:
determining, by the system via the one or more hardware processors, whether the user is a valid user using an authentication mechanism; and
displaying, by the system via the one or more hardware processors, the set of potential passphrases upon determining that the user is the valid user.

3. The processor implemented method (500) as claimed in claim 2, comprising:
upon determining that the user is an in-valid user,
masking, by the system via the one or more hardware processors, each potential passphrase present in the text of each potential file; and
displaying, by the system via the one or more hardware processors, masked potential passphrases on the user device.

4. The processor implemented method (500) as claimed in claim 2, comprising:
providing, by the system via the one or more hardware processors, an explanation for each potential passphrase of the set of potential passphrases;
evaluating, by the system via the one or more hardware processors, a strength of each potential passphrase of the set of potential passphrases based on a predefined set of criteria; and
displaying, by the system via the one or more hardware processors, the strength of each potential passphrase along with the associated potential passphrase.

5. The processor implemented method (500) as claimed in claim 1, comprising:
receiving, by the system via the one or more hardware processors, at least one feedback and at least one comment on one or more potential passphrases present in the set of potential passphrases; and
storing, by the system via the one or more hardware processors, the at least one feedback and the at least one comment in a user feedback store.

6. The processor implemented method (500) as claimed in claim 5, comprising:
fine-tuning, by the system via the one or more hardware processors, the pre-trained machine learning based language model based on a plurality of feedbacks and comments present in the user feedback store using a fine-tuning scheduler, wherein the fine-tuning scheduler follows an iterative process in which one or more parameters and one or more hyperparameters of the pre-trained machine learning based language model are updated in each iteration until the pre-trained machine learning based language model accurately identifies the set of potential passphrases.

7. A system (102), comprising:
a memory (202) storing instructions;
one or more communication interfaces (206); and
one or more hardware processors (204) coupled to the memory (202) via the one or more communication interfaces (206), wherein the one or more hardware processors (204) are configured by the instructions to:
receive a plurality of files present in a user device, wherein the user device is associated with a user;
filter the plurality of files based on a set of file attributes to obtain a set of potential files;
perform a sensitivity analysis of each potential file of the set of potential files based on one or more sensitivity indicators, wherein a sensitivity score is assigned to each of the potential files from the set of potential files based on the sensitivity analysis;
generate a set of context from text present in each potential file of the set of potential files using a constituency tree based technique, wherein the constituency tree based technique comprises:
training a syntactic embedding model based on one or more constituency parse trees present in a passphrase constituency tree database using a graph embedding algorithm;
applying a sliding window technique on the text present in each potential file based on a pre-defined window size to obtain one or more types of content present in the text, wherein a plurality of text windows are created for the text present in each potential file based on the pre-defined window size, and wherein the type of content present in each text window is obtained using the sliding window technique;
assigning a plurality of part-of-speech, POS, tags to a window text present in each text window;
identifying one or more matches between the window text and one or more POS patterns present in a passphrase pattern database based on the plurality of assigned POS tags;
storing the identified one or more matches in a phrase list, wherein the phrase list comprises one or more phrases;
identifying a context window for each phrase in the phrase list; creating a constituency tree for at least one context window matching with a predefined set of context windows;
for each created constituency tree, computing an embedding for an associated constituency tree using the trained syntactic embedding model;
comparing the embedding of each constituency tree with an embedding of a phrase constituency tree created for each phrase in the phrase list, wherein a similarity score is obtained for each comparison;
for each similarity score, determining whether the associated similarity score is greater than a predefined similarity score threshold; and
for each phrase whose similarity score is found to be greater than the predefined similarity score threshold, appending the associated phrase and the context window to the set of context; and
identifying a set of potential passphrases present in the text based on the set of context and the assigned sensitivity score of each potential file using a pre-trained machine learning based language model.

8. The system as claimed in claim 7, wherein the one or more hardware processors (204) are configured by the instructions to:
determine whether the user is a valid user using an authentication mechanism; and
display the set of potential passphrases upon determining that the user is the valid user.

9. The system as claimed in claim 8, wherein the one or more hardware processors (204) are configured by the instructions to:
upon determining that the user is an in-valid user,
mask each potential passphrase present in the text of each potential file; and
display masked potential passphrases on the user device.

10. The system as claimed in claim 8, wherein the one or more hardware processors (204) are configured by the instructions to:
provide an explanation for each potential passphrase of the set of potential passphrases;
evaluate a strength of each potential passphrase of the set of potential passphrases based on a predefined set of criteria; and
display the strength of each potential passphrase along with the associated potential passphrase.

11. The system as claimed in claim 7, wherein the one or more hardware processors (204) are configured by the instructions to:
receive at least one feedback and at least one comment on one or more potential passphrases present in the set of potential passphrases; and
store the at least one feedback and the at least one comment in a user feedback store.

12. The system as claimed in claim 11, wherein the one or more hardware processors (204) are configured by the instructions to:
fine-tune the pre-trained machine learning based language model based on a plurality of feedbacks and comments present in the user feedback store using a fine-tuning scheduler, wherein the fine-tuning scheduler follows an iterative process in which one or more parameters and one or more hyperparameters of the pre-trained machine learning based language model are updated in each iteration until the pre-trained machine learning based language model accurately identifies the set of potential passphrases.

13. One or more non-transitory machine-readable information storage mediums comprising one or more instructions which when executed by one or more hardware processors of a system cause the hardware processors to perform the steps of:
receiving, a plurality of files present in a user device, wherein the user device is associated with a user;
filtering, the plurality of files based on a set of file attributes to obtain a set of potential files;
performing, a sensitivity analysis of each potential file of the set of potential files based on one or more sensitivity indicators, wherein a sensitivity score is assigned to each of the potential files from the set of potential files based on the sensitivity analysis;
generating, a set of context from text present in each potential file of the set of potential files using a constituency tree based technique, wherein the constituency tree based technique comprises:
training, by the system via the one or more hardware processors, a syntactic embedding model based on one or more constituency parse trees present in a passphrase constituency tree database using a graph embedding algorithm;
applying, by the system via the one or more hardware processors, a sliding window technique on the text present in each potential file based on a pre-defined window size to obtain one or more types of content present in the text, wherein a plurality of text windows are created for the text present in each potential file based on the pre-defined window size, and wherein the type of content present in each text window is obtained using the sliding window technique;
assigning, by the system via the one or more hardware processors, a plurality of part-of-speech, POS, tags to a window text present in each text window;
identifying, by the system via the one or more hardware processors, one or more matches between the window text and one or more POS patterns present in a passphrase pattern database based on the plurality of assigned POS tags;
storing, by the system via the one or more hardware processors, the identified one or more matches in a phrase list, wherein the phrase list comprises one or more phrases;
identifying, by the system via the one or more hardware processors, a context window for each phrase in the phrase list;
creating, by the system via the one or more hardware processors, a constituency tree for at least one context window matching with a predefined set of context windows;
for each created constituency tree, computing, by the system via the one or more hardware processors, an embedding for an associated constituency tree using the trained syntactic embedding model;
comparing, by the system via the one or more hardware processors, the embedding of each constituency tree with an embedding of a phrase constituency tree created for each phrase in the phrase list, wherein a similarity score is obtained for each comparison;
for each similarity score, determining, by the system via the one or more hardware processors, whether the associated similarity score is greater than a predefined similarity score threshold; and
for each phrase whose similarity score is found to be greater than the predefined similarity score threshold, appending, by the system via the one or more hardware processors, the associated phrase and the context window to the set of context ; and
identifying, a set of potential passphrases present in the text based on the set of context and the assigned sensitivity score of each potential file using a pre-trained machine learning based language model.

## Patentansprüche

1. Prozessorimplementiertes Verfahren (500), umfassend:
Empfangen (502), durch ein System über einen oder mehrere Hardwareprozessoren, einer Mehrzahl von Dateien, die in einer Benutzervorrichtung vorhanden sind, wobei die Benutzervorrichtung mit einem Benutzer assoziiert ist;
Filtern (504), durch das System über den einen oder die mehreren Hardwareprozessoren, der Mehrzahl von Dateien basierend auf einem Satz von Dateiattributen, um einen Satz von potentiellen Dateien zu erhalten;
Durchführen (506), durch das System über den einen oder die mehreren Hardwareprozessoren, einer Empfindlichkeitsanalyse jeder potenziellen Datei des Satzes von potenziellen Dateien basierend auf einem oder mehreren Empfindlichkeitsindikatoren, wobei jeder der potenziellen Dateien aus dem Satz von potenziellen Dateien basierend auf der Empfindlichkeitsanalyse eine Empfindlichkeitsbewertung zugewiesen wird; Erzeugen (508), durch das System über den einen oder die mehreren Hardwareprozessoren, eines Satzes von Kontext aus Text, der in jeder potentiellen Datei des Satzes von potentiellen Dateien vorhanden ist, unter Verwendung einer auf einem Konfidenzbaum basierenden Technik, wobei die auf einem Konfidenzbaum basierende Technik umfasst:
Trainieren, durch das System über den einen oder die mehreren Hardwareprozessoren, eines syntaktischen Einbettungsmodells basierend auf einem oder mehreren Konfidenz-Parsing-Bäumen, die in einer Passphrase-Konfidenzbaum-Datenbank vorhanden sind, unter Verwendung eines Graphen-Einbettungsalgorithmus;
Anwenden, durch das System über den einen oder die mehreren Hardwareprozessoren, einer Gleitfenstertechnik auf den Text, der in jeder potentiellen Datei vorhanden ist, basierend auf einer vordefinierten Fenstergröße, um einen oder mehrere Typen von Inhalt zu erhalten, der in dem Text vorhanden ist, wobei eine Mehrzahl von Textfenstern für den Text erzeugt wird, der in jeder potentiellen Datei vorhanden ist, basierend auf der vordefinierten Fenstergröße, und wobei der Typ von Inhalt, der in jedem Textfenster vorhanden ist, unter Verwendung der Gleitfenstertechnik erhalten wird;
Zuweisen, durch das System über den einen oder die mehreren Hardwareprozessoren, einer Mehrzahl von Part-of-Speech-, POS-, Tags zu einem Fenstertext, der in jedem Textfenster vorhanden ist;
Identifizieren, durch das System über den einen oder die mehreren Hardwareprozessoren, einer oder mehrerer Übereinstimmungen zwischen dem Fenstertext und einem oder mehreren POS-Mustern, die in einer Passphrase-Muster-Datenbank vorhanden sind, basierend auf der Mehrzahl von zugewiesenen POS-Tags;
Speichern, durch das System über den einen oder die mehreren Hardwareprozessoren, der identifizierten einen oder mehreren Übereinstimmungen in einer Phrasenliste, wobei die Phrasenliste eine oder mehrere Phrasen umfasst;
Identifizieren, durch das System über den einen oder die mehreren Hardwareprozessoren, eines Kontextfensters für jede Phrase in der Phrasenliste;
Erzeugen, durch das System über den einen oder die mehreren Hardwareprozessoren, eines Wahlkreisbaums für mindestens ein Kontextfenster, das mit einem vordefinierten Satz von Kontextfenstern übereinstimmt;
für jeden erzeugten Wahlkreisbaum, Berechnen, durch das System über den einen oder die mehreren Hardwareprozessoren, einer Einbettung für einen assoziierten Wahlkreisbaum unter Verwendung des trainierten syntaktischen Einbettungsmodells;
Vergleichen, durch das System über den einen oder die mehreren Hardwareprozessoren, der Einbettung jedes Wahlkreisbaums mit einer Einbettung eines Phrasenwahlkreisbaums, der für jede Phrase in der Phrasenliste erzeugt wurde, wobei eine Ähnlichkeitsbewertung für jeden Vergleich erhalten wird;
für jede Ähnlichkeitsbewertung, Bestimmen, durch das System über den einen oder die mehreren Hardwareprozessoren, ob die assoziierte Ähnlichkeitsbewertung größer als ein vordefinierter Ähnlichkeitsbewertungsschwellenwert ist; und
für jede Phrase, deren Ähnlichkeitsbewertung als größer als der vordefinierte Ähnlichkeitsbewertungsschwellenwert befunden wird, Anhängen, durch das System über den einen oder die mehreren Hardwareprozessoren, der assoziierten Phrase und des Kontextfensters an den Satz von Kontext; und
Identifizieren (510), durch das System über den einen oder die mehreren Hardwareprozessoren, eines Satzes von potentiellen Passphrasen, die in dem Text vorhanden sind, basierend auf dem Satz von Kontext und der zugewiesenen Empfindlichkeitsbewertung jeder potentiellen Datei unter Verwendung eines vortrainierten maschinenlernbasierten Sprachmodells.

2. Prozessorimplementiertes Verfahren (500) nach Anspruch 1, umfassend:
Bestimmen, durch das System über den einen oder die mehreren Hardwareprozessoren, ob der Benutzer ein gültiger Benutzer ist, unter Verwendung eines Authentifizierungsmechanismus; und
Anzeigen, durch das System über den einen oder die mehreren Hardwareprozessoren, des Satzes von potentiellen Passphrasen bei Bestimmen, dass der Benutzer der gültige Benutzer ist.

3. Prozessorimplementiertes Verfahren (500) nach Anspruch 2, umfassend:
bei Bestimmen, dass der Benutzer ein ungültiger Benutzer ist,
Maskieren, durch das System über den einen oder die mehreren Hardwareprozessoren, jeder potentiellen Passphrase, die in dem Text jeder potentiellen Datei vorhanden ist; und
Anzeigen, durch das System über den einen oder die mehreren Hardwareprozessoren, maskierter potentieller Passphrasen auf der Benutzervorrichtung.

4. Prozessorimplementiertes Verfahren (500) nach Anspruch 2, umfassend:
Bereitstellen, durch das System über den einen oder die mehreren Hardwareprozessoren, einer Erklärung für jede potentielle Passphrase des Satzes von potentiellen Passphrasen;
Bewerten, durch das System über den einen oder die mehreren Hardwareprozessoren, einer Stärke jeder potentiellen Passphrase des Satzes von potentiellen Passphrasen basierend auf einem vordefinierten Satz von Kriterien; und
Anzeigen, durch das System über den einen oder die mehreren Hardwareprozessoren, der Stärke jeder potentiellen Passphrase zusammen mit der assoziierten potentiellen Passphrase.

5. Prozessorimplementiertes Verfahren (500) nach Anspruch 1, umfassend:
Empfangen, durch das System über den einen oder die mehreren Hardwareprozessoren, mindestens einer Rückmeldung und mindestens eines Kommentars zu einer oder mehreren potentiellen Passphrasen, die in dem Satz von potentiellen Passphrasen vorhanden sind; und
Speichern, durch das System über den einen oder die mehreren Hardwareprozessoren, der mindestens einen Rückmeldung und des mindestens einen Kommentars in einem Benutzerrückmeldungsspeicher.

6. Prozessorimplementiertes Verfahren (500) nach Anspruch 5, umfassend:
Feinabstimmen, durch das System über den einen oder die mehreren Hardwareprozessoren, des vortrainierten maschinenlernbasierten Sprachmodells basierend auf einer Mehrzahl von Rückmeldungen und Kommentaren, die in dem Benutzerrückmeldungsspeicher vorhanden sind, unter Verwendung eines Feinabstimmungsplaners, wobei der Feinabstimmungsplaner einem iterativen Prozess folgt, in dem ein oder mehrere Parameter und ein oder mehrere Hyperparameter des vortrainierten maschinenlernbasierten Sprachmodells in jeder Iteration aktualisiert werden, bis das vortrainierte maschinenlernbasierte Sprachmodell den Satz von potentiellen Passphrasen genau identifiziert.

7. System (102), umfassend:
einen Speicher (202), der Anweisungen speichert;
eine oder mehrere Kommunikationsschnittstellen (206); und
einen oder mehrere Hardwareprozessoren (204), die mit dem Speicher (202) über die eine oder die mehreren Kommunikationsschnittstellen (206) gekoppelt sind, wobei der eine oder die mehreren Hardwareprozessoren (204) durch die Anweisungen konfiguriert sind zum:
Empfangen einer Mehrzahl von Dateien, die in einer Benutzervorrichtung vorhanden sind, wobei die Benutzervorrichtung mit einem Benutzer assoziiert ist;
Filtern der Mehrzahl von Dateien basierend auf einem Satz von Dateiattributen, um einen Satz von potentiellen Dateien zu erhalten;
Durchführen einer Empfindlichkeitsanalyse jeder potentiellen Datei des Satzes von potentiellen Dateien basierend auf einem oder mehreren Empfindlichkeitsindikatoren, wobei eine Empfindlichkeitsbewertung jeder der potentiellen Dateien aus dem Satz von potentiellen Dateien basierend auf der Empfindlichkeitsanalyse zugewiesen wird;
Erzeugen eines Satzes von Kontext aus Text, der in jeder potentiellen Datei des Satzes von potentiellen Dateien vorhanden ist, unter Verwendung einer auf einem Konfidenzbaum basierenden Technik, wobei die auf einem Konfidenzbaum basierende Technik umfasst:
Trainieren eines syntaktischen Einbettungsmodells basierend auf einem oder mehreren Konfidenz-Parsing-Bäumen, die in einer Passphrase-Konfidenzbaum-Datenbank vorhanden sind, unter Verwendung eines Graphen-Einbettungsalgorithmus;
Anwenden einer Gleitfenstertechnik auf den Text, der in jeder potentiellen Datei vorhanden ist, basierend auf einer vordefinierten Fenstergröße, um einen oder mehrere Typen von Inhalt zu erhalten, der in dem Text vorhanden ist, wobei eine Mehrzahl von Textfenstern für den Text erzeugt wird, der in jeder potentiellen Datei vorhanden ist, basierend auf der vordefinierten Fenstergröße, und wobei der Typ von Inhalt, der in jedem Textfenster vorhanden ist, unter Verwendung der Gleitfenstertechnik erhalten wird;
Zuweisen einer Mehrzahl von Part-of-Speech-, POS-, Tags zu einem Fenstertext, der in jedem Textfenster vorhanden ist;
Identifizieren einer oder mehrerer Übereinstimmungen zwischen dem Fenstertext und einem oder mehreren POS-Mustern, die in einer Passphrase-Muster-Datenbank vorhanden sind, basierend auf der Mehrzahl von zugewiesenen POS-Tags;
Speichern der identifizierten einen oder mehreren Übereinstimmungen in einer Phrasenliste, wobei die Phrasenliste eine oder mehrere Phrasen umfasst;
Identifizieren eines Kontextfensters für jede Phrase in der Phrasenliste;
Erzeugen eines Wahlkreisbaums für mindestens ein Kontextfenster, das mit einem vordefinierten Satz von Kontextfenstern übereinstimmt;
für jeden erzeugten Wahlkreisbaum, Berechnen einer Einbettung für einen assoziierten Wahlkreisbaum unter Verwendung des trainierten syntaktischen Einbettungsmodells;
Vergleichen der Einbettung jedes Wahlkreisbaums mit einer Einbettung eines Phrasenwahlkreisbaums, der für jede Phrase in der Phrasenliste erzeugt wurde, wobei eine Ähnlichkeitsbewertung für jeden Vergleich erhalten wird;
für jede Ähnlichkeitsbewertung, Bestimmen, ob die assoziierte Ähnlichkeitsbewertung größer als ein vordefinierter Ähnlichkeitsbewertungsschwellenwert ist; und
für jede Phrase, deren Ähnlichkeitsbewertung als größer als der vordefinierte Ähnlichkeitsbewertungsschwellenwert befunden wird, Anhängen der assoziierten Phrase und des Kontextfensters an den Satz von Kontext; und
Identifizieren eines Satzes von potentiellen Passphrasen, die in dem Text vorhanden sind, basierend auf dem Satz von Kontext und der zugewiesenen Empfindlichkeitsbewertung jeder potentiellen Datei unter Verwendung eines vortrainierten maschinenlernbasierten Sprachmodells.

8. System nach Anspruch 7, wobei der eine oder die mehreren Hardwareprozessoren (204) durch die Anweisungen konfiguriert sind zum:
Bestimmen, ob der Benutzer ein gültiger Benutzer ist, unter Verwendung eines Authentifizierungsmechanismus; und
Anzeigen des Satzes von potentiellen Passphrasen bei Bestimmen, dass der Benutzer der gültige Benutzer ist.

9. System nach Anspruch 8, wobei der eine oder die mehreren Hardwareprozessoren (204) durch die Anweisungen konfiguriert sind zum:
bei Bestimmen, dass der Benutzer ein ungültiger Benutzer ist,
Maskieren jeder potentiellen Passphrase, die in dem Text jeder potentiellen Datei vorhanden ist; und
Anzeigen maskierter potentieller Passphrasen auf der Benutzervorrichtung.

10. System nach Anspruch 8, wobei der eine oder die mehreren Hardwareprozessoren (204) durch die Anweisungen konfiguriert sind zum:
Bereitstellen einer Erklärung für jede potentielle Passphrase des Satzes von potentiellen Passphrasen;
Bewerten einer Stärke jeder potentiellen Passphrase des Satzes von potentiellen Passphrasen basierend auf einem vordefinierten Satz von Kriterien; und
Anzeigen der Stärke jeder potentiellen Passphrase zusammen mit der assoziierten potentiellen Passphrase.

11. System nach Anspruch 7, wobei der eine oder die mehreren Hardwareprozessoren (204) durch die Anweisungen konfiguriert sind zum:
Empfangen mindestens einer Rückmeldung und mindestens eines Kommentars zu einer oder mehreren potentiellen Passphrasen, die in dem Satz von potentiellen Passphrasen vorhanden sind; und
Speichern der mindestens einen Rückmeldung und des mindestens einen Kommentars in einem Benutzerrückmeldungsspeicher.

12. System nach Anspruch 11, wobei der eine oder die mehreren Hardwareprozessoren (204) durch die Anweisungen konfiguriert sind zum:
Feinabstimmen des vortrainierten maschinenlernbasierten Sprachmodells basierend auf einer Mehrzahl von Rückmeldungen und Kommentaren, die in dem Benutzerrückmeldungsspeicher vorhanden sind, unter Verwendung eines Feinabstimmungsplaners, wobei der Feinabstimmungsplaner einem iterativen Prozess folgt, in dem ein oder mehrere Parameter und ein oder mehrere Hyperparameter des vortrainierten maschinenlernbasierten Sprachmodells in jeder Iteration aktualisiert werden, bis das vortrainierte maschinenlernbasierte Sprachmodell den Satz von potentiellen Passphrasen genau identifiziert.

13. Ein oder mehrere nichtflüchtige maschinenlesbare Informationsspeichermedien, umfassend eine oder mehrere Anweisungen, die, wenn sie von einem oder mehreren Hardwareprozessoren eines Systems ausgeführt werden, die Hardware veranlassen, die folgenden Schritte durchzuführen:
Empfangen einer Mehrzahl von Dateien, die in einer Benutzervorrichtung vorhanden sind, wobei die Benutzervorrichtung mit einem Benutzer assoziiert ist;
Filtern der Mehrzahl von Dateien basierend auf einem Satz von Dateiattributen, um einen Satz von potentiellen Dateien zu erhalten;
Durchführen einer Empfindlichkeitsanalyse jeder potentiellen Datei des Satzes von potentiellen Dateien basierend auf einem oder mehreren Empfindlichkeitsindikatoren, wobei eine Empfindlichkeitsbewertung jeder der potentiellen Dateien aus dem Satz von potentiellen Dateien basierend auf der Empfindlichkeitsanalyse zugewiesen wird;
Erzeugen eines Satzes von Kontext aus Text, der in jeder potentiellen Datei des Satzes von potentiellen Dateien vorhanden ist, unter Verwendung einer auf einem Konfidenzbaum basierenden Technik, wobei die auf einem Konfidenzbaum basierende Technik umfasst:
Trainieren, durch das System über den einen oder die mehreren Hardwareprozessoren, eines syntaktischen Einbettungsmodells basierend auf einem oder mehreren Konfidenz-Parsing-Bäumen, die in einer Passphrase-Konfidenzbaum-Datenbank vorhanden sind, unter Verwendung eines Graphen-Einbettungsalgorithmus;
Anwenden, durch das System über den einen oder die mehreren Hardwareprozessoren, einer Gleitfenstertechnik auf den Text, der in jeder potentiellen Datei vorhanden ist, basierend auf einer vordefinierten Fenstergröße, um einen oder mehrere Typen von Inhalt zu erhalten, der in dem Text vorhanden ist, wobei eine Mehrzahl von Textfenstern für den Text erzeugt wird, der in jeder potentiellen Datei vorhanden ist, basierend auf der vordefinierten Fenstergröße, und wobei der Typ von Inhalt, der in jedem Textfenster vorhanden ist, unter Verwendung der Gleitfenstertechnik erhalten wird;
Zuweisen, durch das System über den einen oder die mehreren Hardwareprozessoren, einer Mehrzahl von Part-of-Speech-, POS-, Tags zu einem Fenstertext, der in jedem Textfenster vorhanden ist;
Identifizieren, durch das System über den einen oder die mehreren Hardwareprozessoren, einer oder mehrerer Übereinstimmungen zwischen dem Fenstertext und einem oder mehreren POS-Mustern, die in einer Passphrase-Muster-Datenbank vorhanden sind, basierend auf der Mehrzahl von zugewiesenen POS-Tags;
Speichern, durch das System über den einen oder die mehreren Hardwareprozessoren, der identifizierten einen oder mehreren Übereinstimmungen in einer Phrasenliste, wobei die Phrasenliste eine oder mehrere Phrasen umfasst;
Identifizieren, durch das System über den einen oder die mehreren Hardwareprozessoren, eines Kontextfensters für jede Phrase in der Phrasenliste;
Erzeugen, durch das System über den einen oder die mehreren Hardwareprozessoren, eines Wahlkreisbaums für mindestens ein Kontextfenster, das mit einem vordefinierten Satz von Kontextfenstern übereinstimmt;
für jeden erzeugten Wahlkreisbaum, Berechnen, durch das System über den einen oder die mehreren Hardwareprozessoren, einer Einbettung für einen assoziierten Wahlkreisbaum unter Verwendung des trainierten syntaktischen Einbettungsmodells;
Vergleichen, durch das System über den einen oder die mehreren Hardwareprozessoren, der Einbettung jedes Wahlkreisbaums mit einer Einbettung eines Phrasenwahlkreisbaums, der für jede Phrase in der Phrasenliste erzeugt wurde, wobei eine Ähnlichkeitsbewertung für jeden Vergleich erhalten wird;
für jede Ähnlichkeitsbewertung, Bestimmen, durch das System über den einen oder die mehreren Hardwareprozessoren, ob die assoziierte Ähnlichkeitsbewertung größer als ein vordefinierter Ähnlichkeitsbewertungsschwellenwert ist; und
für jede Phrase, deren Ähnlichkeitsbewertung als größer als der vordefinierte Ähnlichkeitsbewertungsschwellenwert befunden wird, Anhängen, durch das System über den einen oder die mehreren Hardwareprozessoren, der assoziierten Phrase und des Kontextfensters an den Satz von Kontext; und
Identifizieren eines Satzes von potentiellen Passphrasen, die in dem Text vorhanden sind, basierend auf dem Satz von Kontext und der zugewiesenen Empfindlichkeitsbewertung jeder potentiellen Datei unter Verwendung eines vortrainierten maschinenlernbasierten Sprachmodells.

## Revendications

1. Procédé mis en œuvre par processeur (500), comprenant :
la réception (502), par un système via un ou plusieurs processeurs matériels, d'une pluralité de fichiers présents dans un dispositif utilisateur, dans lequel le dispositif utilisateur est associé à un utilisateur ;
le filtrage (504), par le système via les un ou plusieurs processeurs matériels, de la pluralité de fichiers sur la base d'un ensemble d'attributs de fichier pour obtenir un ensemble de fichiers potentiels ;
l'exécution (506), par le système via les un ou plusieurs processeurs matériels, d'une analyse de sensibilité de chaque fichier potentiel de l'ensemble de fichiers potentiels sur la base d'un ou plusieurs indicateurs de sensibilité, dans lequel un score de sensibilité est attribué à chacun des fichiers potentiels de l'ensemble de fichiers potentiels sur la base de l'analyse de sensibilité ; la génération (508), par le système via les un ou plusieurs processeurs matériels, d'un ensemble de contexte à partir de texte présent dans chaque fichier potentiel de l'ensemble de fichiers potentiels en utilisant une technique basée sur une arborescence de circonscription, dans lequel la technique basée sur une arborescence de circonscription comprend :
l'entraînement, par le système via les un ou plusieurs processeurs matériels, d'un modèle d'intégration syntaxique sur la base d'une ou plusieurs arborescences d'analyse de circonscription présentes dans une base de données d'arborescence de circonscription de phrase secrète en utilisant un algorithme d'intégration de graphe ;
l'application, par le système via les un ou plusieurs processeurs matériels, d'une technique de fenêtre glissante sur le texte présent dans chaque fichier potentiel sur la base d'une taille de fenêtre prédéfinie pour obtenir un ou plusieurs types de contenu présents dans le texte, dans lequel une pluralité de fenêtres de texte sont créées pour le texte présent dans chaque fichier potentiel sur la base de la taille de fenêtre prédéfinie, et dans lequel le type de contenu présent dans chaque fenêtre de texte est obtenu en utilisant la technique de fenêtre glissante ;
l'attribution, par le système via les un ou plusieurs processeurs matériels, d'une pluralité d'étiquettes de partie de discours, POS, à un texte de fenêtre présent dans chaque fenêtre de texte ;
l'identification, par le système via les un ou plusieurs processeurs matériels, d'une ou plusieurs correspondances entre le texte de fenêtre et un ou plusieurs motifs POS présents dans une base de données de motifs de phrase secrète sur la base de la pluralité d'étiquettes POS attribuées ;
le stockage, par le système via les un ou plusieurs processeurs matériels, des une ou plusieurs correspondances identifiées dans une liste de phrases, dans lequel la liste de phrases comprend une ou plusieurs phrases ;
l'identification, par le système via les un ou plusieurs processeurs matériels, d'une fenêtre de contexte pour chaque phrase dans la liste de phrases ;
la création, par le système via les un ou plusieurs processeurs matériels, d'un arbre de constituants pour au moins une fenêtre de contexte correspondant à un ensemble prédéfini de fenêtres de contexte ;
pour chaque arbre de constituants créé, le calcul, par le système via les un ou plusieurs processeurs matériels, d'une intégration pour un arbre de constituants associé en utilisant le modèle d'intégration syntaxique appris ;
la comparaison, par le système via les un ou plusieurs processeurs matériels, de l'intégration de chaque arbre de constituants avec une intégration d'un arbre de constituants de phrase créé pour chaque phrase dans la liste de phrases, dans lequel un score de similarité est obtenu pour chaque comparaison ;
pour chaque score de similarité, la détermination, par le système via les un ou plusieurs processeurs matériels, si le score de similarité associé est supérieur à un seuil de score de similarité prédéfini ; et
pour chaque phrase dont le score de similarité s'avère être supérieur au seuil de score de similarité prédéfini, l'ajout, par le système via les un ou plusieurs processeurs matériels, de la phrase associée et de la fenêtre de contexte à l'ensemble de contexte ; et
l'identification (510), par le système via les un ou plusieurs processeurs matériels, d'un ensemble de phrases secrètes potentielles présentes dans le texte sur la base de l'ensemble de contexte et du score de sensibilité attribué de chaque fichier potentiel en utilisant un modèle de langage basé sur un apprentissage machine pré-entraîné.

2. Procédé mis en œuvre par processeur (500) selon la revendication 1, comprenant :
la détermination, par le système via les un ou plusieurs processeurs matériels, si l'utilisateur est un utilisateur valide en utilisant un mécanisme d'authentification ; et
l'affichage, par le système via les un ou plusieurs processeurs matériels, de l'ensemble de phrases secrètes potentielles lors de la détermination que l'utilisateur est l'utilisateur valide.

3. Procédé mis en œuvre par processeur (500) selon la revendication 2, comprenant :
lors de la détermination que l'utilisateur est un utilisateur en cours de validité,
le masquage, par le système via les un ou plusieurs processeurs matériels, de chaque phrase secrète potentielle présente dans le texte de chaque fichier potentiel ; et
l'affichage, par le système via les un ou plusieurs processeurs matériels, de phrases secrètes potentielles masquées sur le dispositif utilisateur.

4. Procédé mis en œuvre par processeur (500) selon la revendication 2, comprenant :
la fourniture, par le système via les un ou plusieurs processeurs matériels, d'une explication pour chaque phrase secrète potentielle de l'ensemble de phrases secrètes potentielles ;
l'évaluation, par le système via les un ou plusieurs processeurs matériels, d'une force de chaque phrase secrète potentielle de l'ensemble de phrases secrètes potentielles sur la base d'un ensemble prédéfini de critères ; et
l'affichage, par le système via les un ou plusieurs processeurs matériels, de la force de chaque phrase secrète potentielle avec la phrase secrète potentielle associée.

5. Procédé mis en œuvre par processeur (500) selon la revendication 1, comprenant :
la réception, par le système via les un ou plusieurs processeurs matériels, d'au moins une rétroaction et d'au moins un commentaire sur une ou plusieurs phrases secrètes potentielles présentes dans l'ensemble de phrases secrètes potentielles ; et
le stockage, par le système via les un ou plusieurs processeurs matériels, de l'au moins une rétroaction et de l'au moins un commentaire dans une mémoire de rétroaction utilisateur.

6. Procédé mis en œuvre par processeur (500) selon la revendication 5, comprenant :
le réglage fin, par le système via les un ou plusieurs processeurs matériels, du modèle de langage basé sur un apprentissage machine pré-entraîné sur la base d'une pluralité de rétroactions et de commentaires présents dans la mémoire de rétroaction utilisateur en utilisant un planificateur de réglage fin, dans lequel le planificateur de réglage fin suit un processus itératif dans lequel un ou plusieurs paramètres et un ou plusieurs hyperparamètres du modèle de langage basé sur un apprentissage machine pré-entraîné sont mis à jour à chaque itération jusqu'à ce que le modèle de langage basé sur un apprentissage machine pré-entraîné identifie avec précision l'ensemble de phrases secrètes potentielles.

7. Système (102), comprenant :
une mémoire (202) stockant des instructions ;
une ou plusieurs interfaces de communication (206) ; et
un ou plusieurs processeurs matériels (204) couplés à la mémoire (202) via les une ou plusieurs interfaces de communication (206), dans lequel les un ou plusieurs processeurs matériels (204) sont configurés par les instructions pour :
recevoir une pluralité de fichiers présents dans un dispositif utilisateur, dans lequel le dispositif utilisateur est associé à un utilisateur ;
filtrer la pluralité de fichiers sur la base d'un ensemble d'attributs de fichier pour obtenir un ensemble de fichiers potentiels ;
effectuer une analyse de sensibilité de chaque fichier potentiel de l'ensemble de fichiers potentiels sur la base d'un ou plusieurs indicateurs de sensibilité, dans lequel un score de sensibilité est attribué à chacun des fichiers potentiels de l'ensemble de fichiers potentiels sur la base de l'analyse de sensibilité ;
générer un ensemble de contexte à partir de texte présent dans chaque fichier potentiel de l'ensemble de fichiers potentiels en utilisant une technique basée sur une arborescence de circonscription, dans lequel la technique basée sur une arborescence de circonscription comprend :
l'apprentissage d'un modèle d'intégration syntaxique sur la base d'une ou plusieurs arborescences d'analyse de circonscription présentes dans une base de données d'arborescence de circonscription de phrase secrète en utilisant un algorithme d'intégration de graphe ;
l'application d'une technique de fenêtre glissante sur le texte présent dans chaque fichier potentiel sur la base d'une taille de fenêtre prédéfinie pour obtenir un ou plusieurs types de contenu présents dans le texte, dans lequel une pluralité de fenêtres de texte sont créées pour le texte présent dans chaque fichier potentiel sur la base de la taille de fenêtre prédéfinie, et dans lequel le type de contenu présent dans chaque fenêtre de texte est obtenu en utilisant la technique de fenêtre glissante ;
l'attribution d'une pluralité d'étiquettes de partie de discours, POS, à un texte de fenêtre présent dans chaque fenêtre de texte ;
l'identification d'une ou plusieurs correspondances entre le texte de fenêtre et un ou plusieurs motifs POS présents dans une base de données de motifs de phrase secrète sur la base de la pluralité d'étiquettes POS attribuées ;
le stockage des une ou plusieurs correspondances identifiées dans une liste de phrases, dans lequel la liste de phrases comprend une ou plusieurs phrases ;
l'identification d'une fenêtre de contexte pour chaque phrase dans la liste de phrases ;
la création d'un arbre de constituants pour au moins une fenêtre de contexte correspondant à un ensemble prédéfini de fenêtres de contexte ;
pour chaque arbre de constituants créé, le calcul d'une intégration pour un arbre de constituants associé en utilisant le modèle d'intégration syntaxique appris ;
la comparaison de l'intégration de chaque arbre de constituants avec une intégration d'un arbre de constituants de phrase créé pour chaque phrase dans la liste de phrases, dans lequel un score de similarité est obtenu pour chaque comparaison ;
pour chaque score de similarité, la détermination si le score de similarité associé est supérieur à un seuil de score de similarité prédéfini ; et
pour chaque phrase dont le score de similarité s'avère être supérieur au seuil de score de similarité prédéfini, l'ajout de la phrase associée et de la fenêtre de contexte à l'ensemble de contexte ; et
l'identification d'un ensemble de phrases secrètes potentielles présentes dans le texte sur la base de l'ensemble de contexte et du score de sensibilité attribué de chaque fichier potentiel en utilisant un modèle de langage basé sur un apprentissage machine pré-entraîné.

8. Système selon la revendication 7, dans lequel les un ou plusieurs processeurs matériels (204) sont configurés par les instructions pour :
déterminer si l'utilisateur est un utilisateur valide en utilisant un mécanisme d'authentification ; et
afficher l'ensemble de phrases secrètes potentielles lors de la détermination que l'utilisateur est l'utilisateur valide.

9. Système selon la revendication 8, dans lequel les un ou plusieurs processeurs matériels (204) sont configurés par les instructions pour :
lors de la détermination que l'utilisateur est un utilisateur en cours de validité,
masquer chaque phrase secrète potentielle présente dans le texte de chaque fichier potentiel ; et
afficher des phrases secrètes potentielles masquées sur le dispositif utilisateur.

10. Système selon la revendication 8, dans lequel les un ou plusieurs processeurs matériels (204) sont configurés par les instructions pour :
fournir une explication pour chaque phrase secrète potentielle de l'ensemble de phrases secrètes potentielles ;
évaluer une force de chaque phrase secrète potentielle de l'ensemble de phrases secrètes potentielles sur la base d'un ensemble prédéfini de critères ; et
afficher la force de chaque phrase secrète potentielle avec la phrase secrète potentielle associée.

11. Système selon la revendication 7, dans lequel les un ou plusieurs processeurs matériels (204) sont configurés par les instructions pour :
recevoir au moins une rétroaction et au moins un commentaire sur une ou plusieurs phrases secrètes potentielles présentes dans l'ensemble de phrases secrètes potentielles ; et
stocker l'au moins une rétroaction et l'au moins un commentaire dans une mémoire de rétroaction utilisateur.

12. Système selon la revendication 11, dans lequel les un ou plusieurs processeurs matériels (204) sont configurés par les instructions pour :
le réglage fin du modèle de langage basé sur un apprentissage machine pré-entraîné sur la base d'une pluralité de rétroactions et de commentaires présents dans la mémoire de rétroaction utilisateur en utilisant un planificateur de réglage fin, dans lequel le planificateur de réglage fin suit un processus itératif dans lequel un ou plusieurs paramètres et un ou plusieurs hyperparamètres du modèle de langage basé sur un apprentissage machine pré-entraîné sont mis à jour à chaque itération jusqu'à ce que le modèle de langage basé sur un apprentissage machine pré-entraîné identifie avec précision l'ensemble de phrases secrètes potentielles.

13. Un ou plusieurs supports de stockage d'informations lisibles par machine non transitoires comprenant une ou plusieurs instructions qui, lorsqu'elles sont exécutées par un ou plusieurs processeurs matériels d'un système, amènent le matériel à effectuer les étapes de :
réception, d'une pluralité de fichiers présents dans un dispositif utilisateur, dans lequel le dispositif utilisateur est associé à un utilisateur ;
filtrage, de la pluralité de fichiers sur la base d'un ensemble d'attributs de fichier pour obtenir un ensemble de fichiers potentiels ;
exécution, d'une analyse de sensibilité de chaque fichier potentiel de l'ensemble de fichiers potentiels sur la base d'un ou plusieurs indicateurs de sensibilité, dans lequel un score de sensibilité est attribué à chacun des fichiers potentiels de l'ensemble de fichiers potentiels sur la base de l'analyse de sensibilité ;
génération, d'un ensemble de contexte à partir de texte présent dans chaque fichier potentiel de l'ensemble de fichiers potentiels en utilisant une technique basée sur une arborescence de circonscription, dans lequel la technique basée sur une arborescence de circonscription comprend :
l'entraînement, par le système via les un ou plusieurs processeurs matériels, d'un modèle d'intégration syntaxique sur la base d'une ou plusieurs arborescences d'analyse de circonscription présentes dans une base de données d'arborescence de circonscription de phrase secrète en utilisant un algorithme d'intégration de graphe ;
l'application, par le système via les un ou plusieurs processeurs matériels, d'une technique de fenêtre glissante sur le texte présent dans chaque fichier potentiel sur la base d'une taille de fenêtre prédéfinie pour obtenir un ou plusieurs types de contenu présents dans le texte, dans lequel une pluralité de fenêtres de texte sont créées pour le texte présent dans chaque fichier potentiel sur la base de la taille de fenêtre prédéfinie, et dans lequel le type de contenu présent dans chaque fenêtre de texte est obtenu en utilisant la technique de fenêtre glissante ;
l'attribution, par le système via les un ou plusieurs processeurs matériels, d'une pluralité d'étiquettes de partie de discours, POS, à un texte de fenêtre présent dans chaque fenêtre de texte ;
l'identification, par le système via les un ou plusieurs processeurs matériels, d'une ou plusieurs correspondances entre le texte de fenêtre et un ou plusieurs motifs POS présents dans une base de données de motifs de phrase secrète sur la base de la pluralité d'étiquettes POS attribuées ;
le stockage, par le système via les un ou plusieurs processeurs matériels, des une ou plusieurs correspondances identifiées dans une liste de phrases, dans lequel la liste de phrases comprend une ou plusieurs phrases ;
l'identification, par le système via les un ou plusieurs processeurs matériels, d'une fenêtre de contexte pour chaque phrase dans la liste de phrases ;
la création, par le système via les un ou plusieurs processeurs matériels, d'un arbre de constituants pour au moins une fenêtre de contexte correspondant à un ensemble prédéfini de fenêtres de contexte ;
pour chaque arbre de constituants créé, le calcul, par le système via les un ou plusieurs processeurs matériels, d'une intégration pour un arbre de constituants associé en utilisant le modèle d'intégration syntaxique appris ;
la comparaison, par le système via les un ou plusieurs processeurs matériels, de l'intégration de chaque arbre de constituants avec une intégration d'un arbre de constituants de phrase créé pour chaque phrase dans la liste de phrases, dans lequel un score de similarité est obtenu pour chaque comparaison ;
pour chaque score de similarité, la détermination, par le système via les un ou plusieurs processeurs matériels, si le score de similarité associé est supérieur à un seuil de score de similarité prédéfini ; et
pour chaque phrase dont le score de similarité s'avère être supérieur au seuil de score de similarité prédéfini, l'ajout, par le système via les un ou plusieurs processeurs matériels, de la phrase associée et de la fenêtre de contexte à l'ensemble de contexte ; et
l'identification, d'un ensemble de phrases secrètes potentielles présentes dans le texte sur la base de l'ensemble de contexte et du score de sensibilité attribué de chaque fichier potentiel en utilisant un modèle de langage basé sur un apprentissage machine pré-entraîné.
